# EUROPÄISCHE PATENTSCHRIFT

(11) **EP 1 285 845 B1**
(45) Veröffentlichungstag und Bekanntmachung des Hinweises auf die Patenterteilung: **27.10.2004**
(21) Anmeldenummer: 02017730.9
(22) Anmeldetag: 08.08.2002
(51) Int. Cl.: B62D 29/00, B62D 25/06

(54) **Dachmodul und Verfahren zur Herstellung eines Dachmoduls**
Roof module and manufacturing method of a roof module
Module de toit et méthode de fabrication d'un module de toit

(30) Priorität: 23.08.2001 DE 10141242
(43) Veröffentlichungstag der Anmeldung: 26.02.2003
(73) Patentinhaber: ArvinMeritor GmbH, 63128 Dietzenbach (DE)
(72) Erfinder: Böhm, Horst, 60599 Frankfurt/Main (DE); Grimm, Rainer, 60599 Frankfurt/Main (DE)
(74) Vertreter: Sties, Jochen, Dipl.-Ing.

(56) Entgegenhaltungen:
- EP-A- 1 086 882

## Beschreibung

Die Erfindung betrifft ein Dachmodul mit einer Außenschale und einer geschäumten Innenschale, wobei die Außenschale einen Rand mit einer Schnittkante aufweist. Die Erfindung betrifft ferner ein Verfahren zur Herstellung eines solchen Dachmoduls. Ein derartiges Dachmodul ist aus der EP-A-1 086 882 bekannt.

Bisher wurde das Dachmodul hergestellt, indem die mit einem überbreiten Rand ausgeführte Außenschale in ein Schäumwerkzeug eingelegt und dann auf die Innenseite der Außenschale die Innenschale aufgeschäumt wurde. Die Innenschale erstreckt sich dabei bis zum Rand der Außenschale. Nach dem Schäumen wird der Rand der Außenschale mit der aufgeschäumten Innenschale auf Maß beschnitten. Das Zuschneiden der mit der Innenschale versehenen Außenschale ist ein schwieriger Vorgang, bei dem viel Schmutz entsteht. Außerdem stellt der Teil der Innenschale, der sich auf den abgeschnittenen Rändern der Außenschale befindet, Verschnitt dar, was die Herstellungskosten erhöht. Schließlich hat das Dachmodul nach dem Zuschneiden freiliegende Schnittkanten.

Die Aufgabe der Erfindung besteht darin, ein Dachmodul der eingangs genannten Art sowie ein Verfahren zu seiner Herstellung dahingehend zu verbessern, daß ein geringerer Verschnitt und damit geringere Herstellungskosten entstehen und das Dachmodul keine freiliegenden Schnittkanten hat.

Zu diesem Zweck ist gemäß der Erfindung bei einem Dachmodul der eingangs genannten Art vorgesehen, daß sich die Innenschale bis auf die Schnittkante erstreckt. Ein solches Dachmodul kann durch das folgende Verfahren erhalten werden: Zunächst wird eine Außenschale bereitgestellt. Dann werden die Ränder der Außenschale auf Maß zugeschnitten. Anschließend wird die Außenschale in ein Schäumwerkzeug eingelegt, und es wird ein aushärtbares Material auf die Außenschale aufgebracht. Dann wird das Schäumwerkzeug geschlossen, wobei eine Dichtung im Schäumwerkzeug von außen nach innen gegen den Rand der Außenschale drückt. Das aushärtbare Material härtet aus, wobei es bis auf die Schnittkanten am Rand der Außenschale gelangt. Das auf diese Weise hergestellte Dachmodul muß nach dem Schäumvorgang nicht mehr zugeschnitten werden. Somit muß in das Schäumwerkzeug nur so viel Material für die Innenschale eingebracht werden, wie für diese tatsächlich erforderlich ist; es entsteht kein Verlust. Da sich die Innenschale bis auf die Schnittkanten am Rand der Außenschale erstreckt, sind die Schnittkanten, die beim Zuschneiden der Außenschale vor dem Schäumen entstanden sind, versiegelt.

Gemäß einer bevorzugten Ausführungsform der Erfindung ist vorgesehen, daß die Außenschale an ihrem Rand hinterschnitten ausgeführt ist. Dies kann dadurch erzielt werden, daß bei der Herstellung des Dachmoduls die Dichtung beim Schließen des Schäumwerkzeugs elastisch gegen die Außenschale gedrückt wird und dabei die Außenschale plastisch verformt. Es ist bei dieser Vorgehensweise nicht erforderlich, in dem Schäumwerkzeug Schieber vorzusehen, die sonst üblicherweise zur Erzeugung eines Hinterschnitts beim Schäumen erforderlich sind. Auch ist es nicht erforderlich, daß die Außenschale den Hinterschnitt bereits vor dem Schäumen aufweist. Dies wäre nämlich bei der Herstellung der Außenschale nur mit großem Aufwand zu bewerkstelligen.

Vorteilhafte Ausgestaltungen der Erfindung ergeben sich aus den abhängigen Ansprüchen.

Die Erfindung wird nachfolgend anhand zweier Ausführungsformen beschrieben, die in den beigefügten Zeichnungen dargestellt sind. In diesen zeigen:
- Figur 1 in einer abgebrochenen Schnittansicht ein Schäumwerkzeug in geöffnetem Zustand mit eingelegter Außenschale gemäß einer ersten Ausführungsform;
- Figur 2 das Schäumwerkzeug von Figur 1 in geschlossenem Zustand, wobei auf die Außenschale eine Innenschale aufgeschäumt ist;
- Figur 3 in vergrößertem Maßstab einen Ausschnitt von Figur 2;
- Figur 4 in einer abgebrochenen Schnittansicht ein Schäumwerkzeug im geschlossenen Zustand mit Außenschale und aufgeschäumter Innenschale gemäß einer zweiten Ausführungsform; und
- Figur 5 in vergrößertem Maßstab einen Ausschnitt von Figur 4.

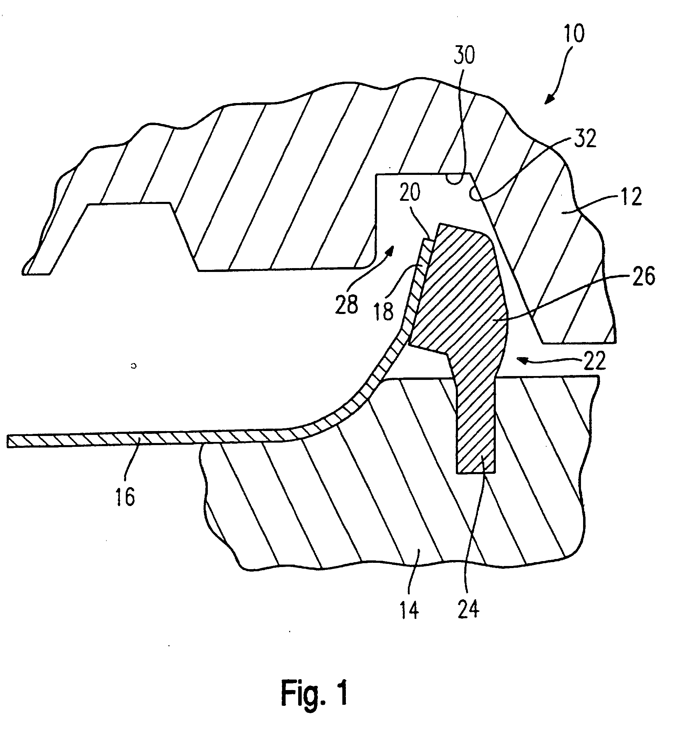

In den Figuren 1 bis 3 ist schematisch ein Schäumwerkzeug 10 gezeigt, das aus einem Oberteil 12 und einem Unterteil 14 besteht. Im Unterteil 14 ist eine Außenschale 16 aufgenommen, die Teil eines Dachmoduls wird und beispielsweise aus Aluminium oder Kunststoff bestehen kann. Die Außenschale 16 weist einen Rand 18 auf, der an einer Schnittkante 20 endet. Die Schnittkante entsteht, wenn die Außenschale 16 auf Maß zugeschnitten wird. Diese Schnittkante wird häufig auch als Schnittfläche bezeichnet.

Im Unterteil 14 des Schäumwerkzeugs 10 ist eine Dichtung 22 aufgenommen, die einen im Unterteil 14 verankerten Fußabschnitt 24 und einen dem Rand 18 der Außenschale 16 zugeordneten Kopfabschnitt 26 aufweist. Die Dichtung 22 besteht aus einem Material, das einerseits im Hinblick auf den Schäumvorgang ausreichend druck- und temperaturbeständig ist, andererseits jedoch elastisch verformbar ist.

Das Oberteil 12 des Schäumwerkzeugs 10 weist einen Abdichtungsabschnitt 28 auf, der dem Rand 18 der Außenschale 16 und dem Kopfabschnitt 26 der Dichtung 22 zugeordnet ist. Der Abdichtungsabschnitt 28 setzt sich aus einer Abschlußfläche 30 und einer Druckfläche 32 zusammen. Die Abschlußfläche 30 verläuft etwa senkrecht zu der Richtung, entlang der das Oberteil 12 und das Unterteil 14 des Schäumwerkzeugs 10 relativ zueinander verstellbar sind. Die Druckfläche 32 verläuft schräg zur Abschlußfläche.

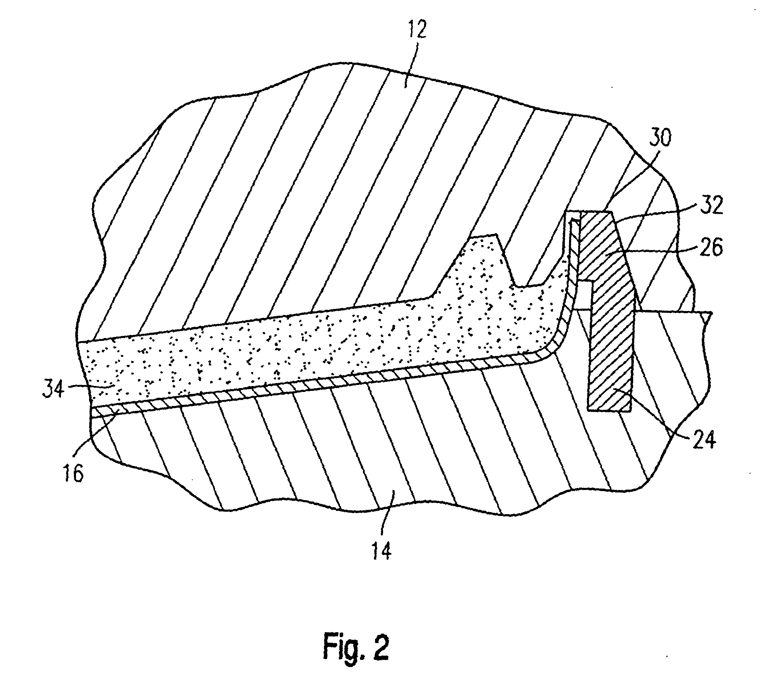

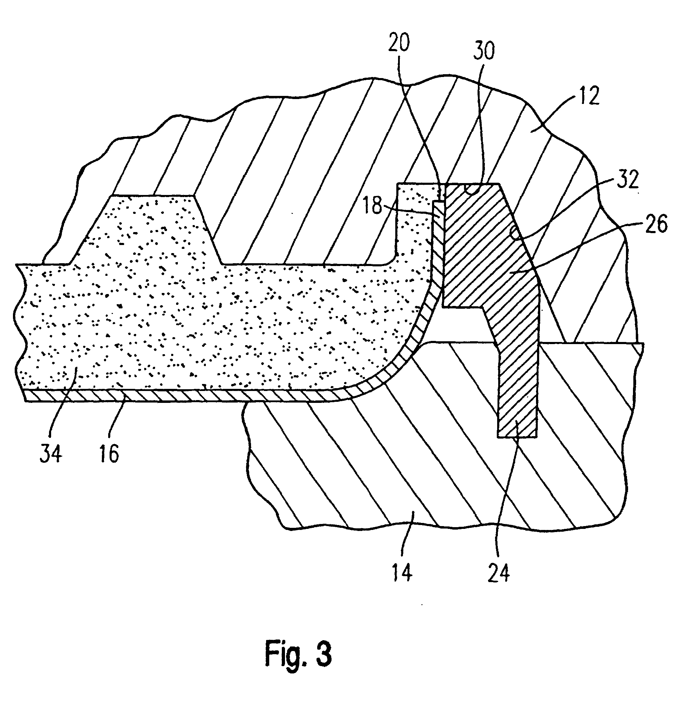

Wenn das Schäumwerkzeug 10 aus der in Figur 1 gezeigten, geöffneten Stellung in die in Figur 2 gezeigte, geschlossene Stellung überführt wird, greift die schräg verlaufende Druckfläche 32 am Kopfabschnitt 26 der elastischen Dichtung 22 an und verschiebt diesen durch eine Keilwirkung nach links. Dabei wird auch der am Kopfabschnitt 26 der Dichtung 22 anliegende Rand 18 der Außenschale 16 nach links verschoben. Im geschlossenen Zustand des Schäumwerkzeugs liegt die Abschlußfläche 32 dicht auf der Oberseite des Kopfabschnittes 26 der Dichtung 22 an. Die Schnittkante 20 des Randes 18 der Außenschale 16 liegt der Abschlußfläche 30 in geringem Abstand gegenüber (siehe insbesondere Figur 3).

Vor dem Schließen des Schäumwerkzeugs 10 wurde auf die Außenschale 16 ein schäumbares Material aufgebracht, das nach dem Schließen des Schäumwerkzeugs aushärtet, so daß es auf der Innenseite der Außenschale 16 eine Innenschale 34 bildet. Wie insbesondere in Figur 3 zu sehen ist, erstreckt sich die Innenschale entlang dem Rand 18 bis auf die Schnittkante 20, die vom Material der Innenschale 34 abgedeckt ist. In dem Bereich, in welchem das Material der Innenschale 34 am Kopfabschnitt 26 der Dichtung 22 anliegt, also zwischen der Schnittkante 20 der Außenschale 16 und der Abschlußfläche 30 des Oberteils 12 des Schäumwerkzeugs, erstreckt sich die Innenschale von der Schnittkante weg in der Verlängerung der Außenfläche der Außenschale. Das dort befindliche Material versiegelt die Schnittkante 20. Da der Kopfabschnitt 26 der Dichtung den Rand 18 der Außenschale 16 beim Schließen des Schäumwerkzeugs nach innen zur Mitte der Außenschale 16 hin verschoben hat, liegt der Rand 18 der Außenschale 16 mit ausreichend hoher Kraft am Kopfabschnitt 26 der Dichtung 22 an, so daß das Material der Innenschale 34 nicht in den Bereich zwischen dem Rand 18 der Außenschale 16 und dem Kopfabschnitt 26 der Dichtung 22 eintreten und damit aus dem Schäumwerkzeug austreten kann. Somit sind die Ränder des von der Außenschale 16 und der Innenschale 34 gebildeten Dachmoduls nach dem Schäumen glatt, ohne daß sie nachträglich beschnitten werden müssen.

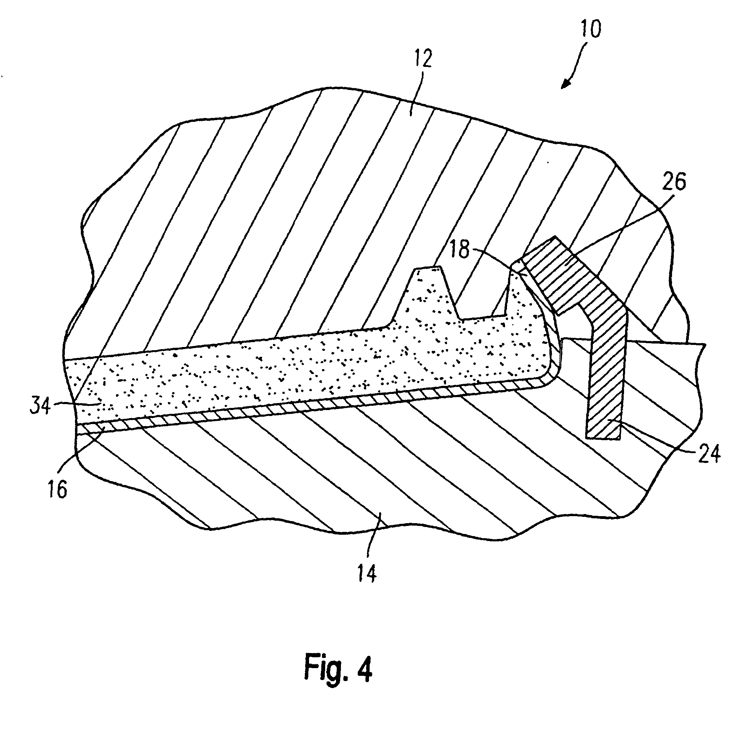

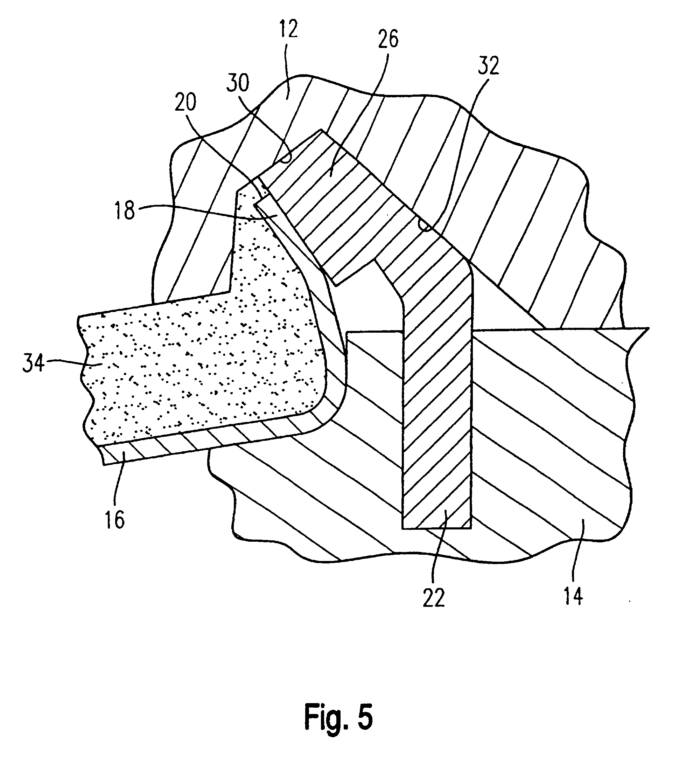

In den Figuren 4 und 5 ist ein Dachmodul gemäß einer zweiten Ausführungsform gezeigt. Für die von der ersten Ausführungsform bekannten Bauelemente werden dieselben Bezugszeichen verwendet, und es wird auf die obigen Erläuterungen verwiesen.

Der Unterschied zwischen der ersten Ausführungsform und der zweiten Ausführungsform besteht darin, daß bei der zweiten Ausführungsform die Druckfläche 32 stärker geneigt ist, so daß beim Schließen des Schäumwerkzeugs der Kopfabschnitt 26 der Dichtung 22 stärker nach links verschoben wird. Der Rand 18 der Außenschale 16 wird dabei so weit zur Mitte der Außenschale 16 hin verschoben, daß die Außenschale hinterschnitten ist, die Schnittkante 20 also weiter innen liegt als der Rand 18 im Bereich des Übergangs zum sich waagrecht erstreckenden Mittelabschnitt der Außenschale 16. Die Verformung des Randes 18 beim Schließen des Formwerkzeugs ist vorzugsweise plastisch, so daß es nach Öffnen des Schäumwerkzeugs nur zu einer geringen Rückfederung kommt, die den Halt der Innenschale 34 an der Außenschale 16 nicht übermäßig belastet. Der Hinterschnitt kann beispielsweise im Bereich der Heckklappe eines mit dem Dachmodul versehenen Fahrzeugs vorteilhaft sein.

### Bezugszeichenliste

- 10:: Schäumwerkzeug
- 12:: Oberteil Schäumwerkzeug
- 14:: Unterteil Schäumwerkzeug
- 16:: Außenschale
- 18:: Rand
- 20:: Schnittkante
- 22:: Dichtung
- 24:: Fußabschnitt
- 26:: Kopfabschnitt
- 28:: Abdichtungsabschnitt
- 30:: Abschlußfläche
- 32:: Druckfläche
- 34:: Innenschale

## Patentansprüche

1. Dachmodul mit einer Außenschale (16) und einer geschäumten Innenschale (34), wobei die Außenschale (16) einen Rand (18) mit einer Schnittkante (20) aufweist, **dadurch gekennzeichnet, daß** sich die geschäumte Innenschale (34) bis auf die Schnittkante (20) erstreckt.

2. Dachmodul nach Anspruch 1, **dadurch gekennzeichnet, daß** sich die Innenschale (34) von der Schnittkante (20) weg in der Verlängerung der Außenfläche der Außenschale (16) erstreckt.

3. Dachmodul nach Anspruch 1 oder Anspruch 2, **dadurch gekennzeichnet, daß** die Außenschale (16) an ihrem Rand (18) hinterschnitten ausgeführt ist.

4. Verfahren zur Herstellung eines Dachmoduls mit einer Außenschale (16) und einer geschäumten Innenschale (34) mittels der folgenden Schritte:
- es wird eine Außenschale (16) bereitgestellt;
- die Ränder (18) der Außenschale werden auf Maß zugeschnitten;
- die Außenschale (16) wird in ein Schäumwerkzeug (10) eingelegt;
- es wird ein aushärtbares Material auf die Außenschale aufgebracht;
- das Schäumwerkzeug (10) wird geschlossen, wobei eine Dichtung (22) im Schäumwerkzeug (10) von außen nach innen gegen den Rand (18) der Außenschale (16) drückt;
- das aushärtbare Material härtet aus, wobei es bis auf die Schnittkanten (20) am Rand der Außenschale (16) gelangt.

5. Verfahren nach Anspruch 4, **dadurch gekennzeichnet, daß** die Dichtung (22) beim Schließen des Schäumwerkzeugs (10) elastisch gegen die Außenschale gedrückt wird.

6. Verfahren nach Anspruch 5, **dadurch gekennzeichnet, daß** die Dichtung (22) die Außenschale (16) beim Schließen des Schäumwerkzeugs plastisch verformt.

## Claims

1. A roof module comprising an outer shell (16) and a foamed inner shell (34), the outer shell (16) having a rim (18) including an edge of cut (20), **characterized in that** the foamed inner shell (34) extends as far as onto the edge of cut (20).

2. The roof module according to claim 1, **characterized in that** the inner shell (34) extends away from the edge of cut (20) in an extension of the outer surface of the outer shell (16).

3. The roof module according to claim 1 or claim 2, **characterized in that** the outer shell (16) is configured with an undercut at its rim (18).

4. A method of producing a roof module comprising an outer shell (16) and a foamed inner shell (34) by means of the following steps:
- an outer shell (16) is made available;
- the rims (18) of the outer shell are cut to size;
- the outer shell (16) is placed in a foaming tool (10);
- a curable material is applied onto the outer shell;
- the foaming tool (10) is closed, a seal (22) in the foaming tool (10) pressing against the rim (18) of the outer shell (16) from the outside inwards;
- the curable material cures, it reaching as far as onto the edges of cut (20) at the rim of the outer shell (16).

5. The method according to claim 4, **characterized in that** the seal (22) is elastically pressed against the outer shell when the foaming tool (10) is closed.

6. The method according to claim 5, **characterized in that** the seal (22) plastically deforms the outer shell (16) when the foaming tool is closed.

## Revendications

1. Module de toit avec une coque externe (16) et une coque interne à structure alvéolaire (34), dans lequel la coque externe (16) présente un bord (18) présentant une arête coupante (20), **caractérisé en ce que** la coque interne à structure alvéolaire (34) s'étend sur l'arête coupante (20).

2. Module de toit selon la revendication 1, **caractérisé en ce que** la coque interne (34) s'étend à partir de l'arête coupante (20) en s'éloignant dans l'extension de la surface externe de la coque externe (16).

3. Module de toit selon la revendication 1 ou la revendication 2, **caractérisé en ce que** la coque externe (16) présente sur son bord (18) une contre-dépouille.

4. Procédé de fabrication d'un module de toit avec une coque externe (16) et une coque interne à structure alvéolaire (34), au moyen des étapes consistant :
- à fournir une coque externe (16) ;
- à couper les bords (18) de la coque externe à la bonne dimension ;
- à placer la coque externe (16) dans un moule en mousse (10) ;
- à introduire un matériau durcissable sur la coque externe ;
- à fermer le moule en mousse (10), un joint d'étanchéité (22) dans le moule en mousse (10) s'appuyant, de l'extérieur vers l'intérieur, contre le bord (18) de la coque externe (16) ;
- à durcir le matériau durcissable, le matériau durcissable arrivant jusque sur les arêtes coupantes (20) au bord de la coque externe (16).

5. Procédé selon la revendication 4, **caractérisé en ce que** le joint d'étanchéité (22) est poussé, lors de la fermeture du moule en mousse (10), élastiquement contre la coque externe.

6. Procédé selon la revendication 5, **caractérisé en ce que** le joint d'étanchéité (22) effectue une déformation plastique de la coque externe (16) lors de la fermeture du moule en mousse.
